**Europäisches Patentamt**

**European Patent Office**

**Office européen des brevets**

(11) Veröffentlichungsnummer: **0 416 412 A1**

## EUROPÄISCHE PATENTANMELDUNG

(21) Anmeldenummer: 90116354.3

(22) Anmeldetag: 27.08.90

(51) Int. Cl.5: **F16D 65/16**, F16D 55/46,
B60T 1/06, F16D 55/24

(30) Priorität: 02.09.89 DE 3929250

(43) Veröffentlichungstag der Anmeldung:
**13.03.91 Patentblatt 91/11**

(84) Benannte Vertragsstaaten:
**BE DE DK FR GB IT**

(71) Anmelder: **DEERE & COMPANY**
**1 John Deere Road**
**Moline, Illinois 61265(US)**

(72) Erfinder: **Scheid, Heinrich**
**Merowingerstrasse 9**
**W-6653 Blieskastel(DE)**
Erfinder: **Kempf, Bernd**
**Friedhofstrasse 10**
**W-6661 Althornbach(DE)**

(74) Vertreter: **Feldmann, Bernhard**
**DEERE & COMPANY European Office Patent**
**Department Steubenstrasse 36-42**
**W-6800 Mannheim 1(DE)**

(54) **Bremse, insbesondere Scheibenbremse.**

(57)
1 Bisher bekannte Bremsen, die sowohl als Betriebs- wie auch als Feststellbremsen verwendet werden sollten, wiesen zwei Anpreßglieder auf, die unter einem großen Raumaufwand oder mit vielen Teilen abwechselnd an ein Bremsglied zur Anlage gebracht werden konnten.

2 Es wird zur Verringerung der Teile und des Raumbedarfs sowie zur gleichmäßigen Einleitung der Bremskraft auf das Bremsglied (14) vorgeschlagen, die beiden Anpreßglieder (16, 18) hintereinander zu schalten und das dem Bremsglied (14) zugelegene Anpreßglied (16) wahlweise mittels einer ersten oder einer zweiten Betätigungseinrichtung (20, 22') zu bewegen.

3 Derartige Bremsen finden Anwendung bei Kraftfahrzeugen.

FIG.1

## BREMSE, INSBESONDERE SCHEIBENBREMSE

Die Erfindung betrifft eine Bremse, insbesondere Scheibenbremse.

Eine bekannte Bremse (DE-OS-2 412 704) enthält zwei Bremsscheiben, die einerseits an die Bremsflächen einer Bremstrommel anpreßbar sind und andererseits wahlweise von einer hydraulischen und einer mechanischen Spreizvorrichtung betätigbar sind. Während die hydraulische Spreizvorrichtung aus einem Ringkolben und einem diesen in sich aufnehmenden Ringzylinder besteht, setzt sich die mechanische Spreizvorrichtung aus Schienen mit Schrägflächen, Kugeln und einem Zugglied zusammen, die bei einer entsprechenden Betätigung des Zugglieds voneinander wegbewegt werden und an den Bremsscheiben zur Anlage kommen. Während Ringzylinder und Ringkolben konzentrisch zu einer mit der Bremstrommel verbundenen Welle ausgebildet und angeordnet sind, erstreckt sich die mechanische Spreizvorrichtung tangential außerhalb der hydraulischen Spreizvorrichtung zwischen den beiden Bremsscheiben. Beide Spreizvorrichtungen werden unabhängig voneinander als Betriebsbremse und als Feststellbremse verwendet.

Die mechanische Spreizvorrichtung der erstgenannten Bremse greift nur an einer Stelle des Umfangs an und vermag deshalb nur eine geringe und ungleichmäßig verteilte Bremskraft aufzubringen.

Bei einer anderen Bremse (Lucas International plc 1985, LG 201) werden mehrere Bremsscheiben mittels zweier konzentrisch zu einer Welle angeordneter, Schrägflächen und Ku geln aufweisender Spreizscheiben an eine Bremsfläche angepreßt und bringen somit die Welle zum Stillstand. Zum Einleiten eines Bremsvorgangs werden jeweils die beiden Spreizscheiben tangential gegeneinander bewegt, was sowohl über einen Hebelmechanismus als auch über einen Hydraulikzylinder erfolgen kann.

Der Hydraulikzylinder muß schräg angeordnet werden, damit er an beiden Spreizscheiben angreifen kann, und die Bremsscheiben müssen mit zusätzlichen Anlagenocken versehen werden.

Beide Bremsen weisen gemeinsam den Nachteil auf, daß die Spreizvorrichtungen zum Betätigen der Bremsscheiben jeweils radial aufeinander folgen, so daß sich ungünstige Baumaße ergeben, die ihren Einbau unter beengten Verhältnissen nicht zulassen.

Die der Erfindung zugrunde liegende Aufgabe wird darin gesehen, eine Bremse zu entwickeln, die mittels zweier Betätigungsvorrichtungen aktiviert werden kann, die geringe Baumaße aufweist und deren Bremskraft auf die Bremselemente, vorzugsweise die Bremsscheiben, gleichmäßig eingeleitet wird.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise kann eines der Anpreßglieder direkt und alleine mittels einer unabhängigen Betätigungsvorrichtung an dem Bremsglied angelegt werden, wobei die mit ihm übertragbare Bremsleistung dem damit verbundenen Zweck anpaßbar ist. Das Bremsglied kann sowohl eine Bremsscheibe, wie auch eine Bremstrommel sein. Somit kann dieses Anpreßglied beispielsweise für eine Betriebsbremse mit einer hohen Bremsleistung und einem unabhängigen Bremskreis verwendet werden. Das andere Anpreßglied, das evtl. nur zur Feststellung eines Fahrzeugs im geparkten Zustand erforderlich ist, kommt mit einer geringen Bremsleistung aus und kann mechanisch mittels Spreizscheiben betätigt werden und über das erste Anpreßglied Druck auf das Bremsglied ausüben. Es ist somit zudem gewährt, daß in beiden Fällen die Bremsleistung in gleicher Weise auf das Bremsglied eingeleitet wird; sie ist lediglich im Betrag geringer. Das Vorhandensein einer unabhängigen Betätigungsvorrichtung gewährleistet zudem, daß nicht bei jedem Bremsvorgang beide Anpreßglieder betätigt werden.

Eine problemlose Bremskrafteinleitung ergibt sich bei der Verwendung eines Druckmittelkolbens, also eines Hydraulik-oder Pneumatikkolbens, der trotz einer kleinen Wirkfläche bei hohem Druck eine entsprechend hohe Bremsleistung erbringt und diese insbesondere bei Ringkolben gleichmäßig in das Bremsglied einleitet.

Die an einem Kolben naturgemäß vorhandenen größeren Flächen sind ausreichend groß, um auf sie Druckmittel wie auch das andere Anpreßglied wirken zu lassen.

Wird der Druckmittelkolben in seinem Zylinder drehgesichert, kann das an ihm anliegende zweite Anpreßglied eine Druckscheibe eines spreizbaren Druckscheibenzusammenbaus sein, auf die zur Bremskrafteinleitung tangentiale Kräfte einwirken.

Die Bremskräfte lassen sich auf kurzem Weg mit hoher Kraft und mechanisch auf die Druckscheiben einleiten, wenn diese Schrägflächen enthalten, die zwischen sich Rollkörper aufnehmen und gegeneinander tangential verstellbar sind.

Eine gedrängte Bauweise ergibt sich, wenn eine der Druckscheiben an das erste Anpreßglied anschließt, wobei es möglich ist, die Druckscheiben zwischen dem Druckmittelkolben und dem Bremsglied anzuordnen und mittels des Druckmittelkolbens den gesamten Druckscheibenzusammenbau an das Bremsglied anzupressen. Gleichermaßen kann der Druckmittelkolben zwischen dem Druckscheibenzusammenbau und dem Bremsglied vorgesehen werden, so daß bei Betätigung des Druckscheibenzusammenbaus der Druckmittelkolben verschoben wird.

Eine noch gedrängtere Bauweise und eine Verringerung der Teilezahl läßt sich erreichen, wenn der Druckmittelkolben mit einer der Druckscheiben einteilig ausgebildet ist, so daß an ihm z. B. die Schrägflächen vorgesehen sind.

Die übertragbare Bremsleistung läßt sich variieren, wenn das Bremsglied eine Vielzahl axial bewegbarer Lamellen enthält.

Die Verwendung eines Hebels zur Einleitung des Schwenkvorgangs der zweiten beweglichen Druckscheibe, der drehbar in oder an einer Wand des Gehäuses der Bremse gelagert ist, erlaubt es durch die Anpassung seiner Länge auch hohe Kräfte zu übertragen und die in ihn eingeleitete Drehbewegung in eine lineare Bewegung, die tangential zu dem Umfang der Druckscheibe verläuft, umzuwandeln. Der Durchtritt des Hebels oder eines ihm nachgeschalteten Kolbens durch die Wand kann auf einfache Weise mit einem Rundschnurdichtring abgedichtet werden, so daß das Innere der Bremse geschützt bleibt.

Insbesondere die Übertragung der über den Hebel eingeleiteten linearen Bewegung mittels eines sich linear verschiebenden Kolbens läßt es zu, diesen Kolben auch hydraulisch oder elektrisch anzusteuern.

In der Zeichnung ist ein nachfolgend näher beschriebenes Ausführungsbeispiel der Erfindung dargestellt. Es zeigt

Figur 1 eine erfindungsgemäße Bremse in Seitenansicht und im Schnitt,

Figur 2 eine Seitenansicht eines zweiten Anpreßglieds innerhalb der Bremse gemäß der Linie A-A und in der Blickrichtung der dazugehörigen Pfeile und

Figur 3 eine Betätigungseinrichtung aus gleicher Sicht wie Figur 2.

Eine erfindungsgemäße Bremse 10 setzt sich im wesentlichen aus einem Gehäuse 12, einem Bremsglied 14, einem ersten und einem zweiten Anpreßglied 16 und 18 und einer ersten und einer zweiten Betätigungseinrichtung 20 und 22 zusammen und ist bestimmt, einen Teil 24 bei Bedarf stillzusetzen.

Das Gehäuse 12 besteht aus zwei Deckeln 26, 26′ und einem dazwischen angeordneten Ring 28; diese sind jeweils nahezu rotationssymmetrisch um eine gemeinsame Achse ausgebildet und an den einanderzugelegenen Stirnflächen miteinander verschraubt, was jedoch der Einfachheit wegen im Detail weder gezeichnet noch beschrieben ist. Die Deckel 26, 26′, wie auch der Ring 28 sind aus Stahlguß gegossen.

Beide Deckel 26, 26′ weisen eine zentrische Bohrung 30 auf, in die jeweils ein Lager 32 zur drehbeweglichen Aufnahme des Teils 24 und ein Dichtring 34 eingesetzt ist. Sowohl das Lager 32, wie auch der Dichtring 34 werden auf herkömmliche Weise gegen eine Axialbewegung gesichert. Der Deckel 26′ weist zudem ein Lagergehäuse 36 mit einer Bohrung 38 auf, deren Längsmittelachse parallel zu der Dreh achse des Teils 24 verläuft. Schließlich ist in den Deckel 26′ ein Ringraum 40 eingedreht, dessen Durchmesser größer ist als der der Bohrung 30 und nahezu bis an die Bohrung 38 reicht.

Der Ring 28 weist eine innere und eine äußere Ringkammer 42 und 44 auf, deren Durchmesser unterschiedlich groß sind. Der Durchmesser der inneren Ringkammer 42 ist geringfügig größer als der des Ringraums 40, und seine Wände sind fein bearbeitet, und in dem Schnittpunkt seiner Wände tritt ein Kanal 46 ein. Der Durchmesser der äußeren Ringkammer 44 ist größer als der der inneren Ringkammer 42. Von der dem Deckel 26′ zugelegenen Stirnfläche erstreckt sich eine zylindrische Ausnehmung 48 konzentrisch bis zu der inneren Ringkammer 42 mit einem Durchmesser, der ungefähr dem des Ringraums 40 entspricht. Bei diesem Ausführungsbeispiel ist in der Nähe des Kanals 46 eine Bohrung 38′ vorgesehen, die konzentrisch zu der Bohrung 38 in dem Deckel 26′ verläuft. Schließlich sind an einer koaxial zu der Drehachse des Teils 24 verlaufenden Außenwand 50 der äußeren Ringkammer 44 sich radial erstreckende Zähne 52 vorgesehen, die sich über dessen gesamte axiale Länge erstrecken.

Das Bremsglied 14 wird in diesem Ausführungsbeispiel gebildet von mehreren gleichachsig angeordneten, axial aufeinanderfolgenden und ringförmigen Lamellen 54 und einem Lamellenträger 56 mit einer Außenverzahnung 58, der drehfest auf dem Teil 24 befestigt ist. Die Lamellen 54 sind mit einem Bremsbelag hohen Reibkoeffizients versehen und greifen abwechselnd in die Zähne 52 und in die Außenverzahnung 58 ein, so daß ihr Innendurchmesser etwa dem des Lamellenträgers 56 und ihr Außendurchmesser dem der äußeren Ringkammer 44 entspricht. Die Lamellen 54 sind gegenüber den Zähnen 52 und der Außenverzahnung 58 in der Richtung der Drehachse des Teils 24 axial beweglich und liegen bei ausreichendem Druck rutschfest an sich und dem Deckel 26 an. Im unbelasteten Zustand können sich die innenverzahnten und die außenverzahnten Lamellen 54 gegeneinander verschieben.

Das erste Anpreßglied 16 enthält einen Druckmittelkolben 60 und einen Dichtring 62, die konzentrisch zu der Drehachse des Teils 24 und in der inneren Ringkammer 42 und der Ausnehmung 48 verschiebbar angeordnet sind.

Der Druckmittelkolben 60 ist als Stufenkolben ausgebildet und weist demnach eine Radialwand 64, eine innere Axialwand 66 und eine äußere Axialwand 68 auf. Die innere Axialwand 66 nimmt in einer Nut den Dichtring 62 auf und bewegt sich mit diesem gleitend an der Mantelfläche der Ausnehmung 48. Die äußere Axialwand 68 kann an der Innenfläche der inneren Ringkammer 42 entlanggleiten, die zur Abdichtung einen Dichtring 62' hält. Die Radialwand 64 verbindet die beiden Axialwände 66, 68. Die innere Axialwand 66 grenzt mit der Radialwand 64 und den gegenüberliegenden Wänden der inneren Ringkammer 42 einen Druckmittelraum 70 ein, der abhängig von der Stellung des Druckmittelkolbens 60 mehr oder weniger groß ist und in den der Kanal 46 mündet. Der Druckmittelraum 70 ist zu beiden Seiten mittels der Dichtringe 62, 62' abgedichtet, so daß in ihm mittels eines Druckmittels ein entsprechend großer Druck aufgebaut werden kann.

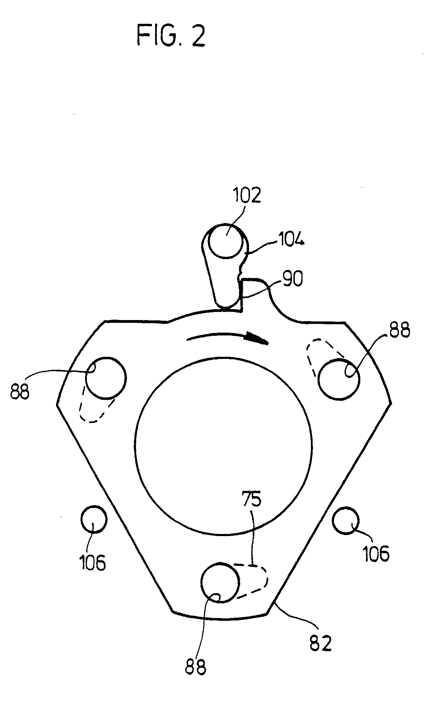

Die in der Zeichnung links gelegene Stirnfläche 72 des Druckmittelkolbens 60 verläuft radial und somit parallel zu den Reibflächen der Lamellen 54. Die in der Zeichnung rechts gelegene Stirnfläche 74 des Druckmittelkolbens enthält in Figur 2 angedeutete an sich hinreichend bekannte Schrägflächen 75, die sich schräg zu der Radialebene auf Teilstücken der Kreisbahn der Stirnfläche 74 erstrecken.

Der Druckmittelkolben 60 weist im übrigen eine radial verlaufende und eine die Öffnung 76 umgebende Schulter 78 mit einem Loch 80 auf. Die Öffnung 76 ist ausreichend groß, um den Teil 24 durch sich hindurchtreten zu lassen. Schließlich sind in den Druckmittelkolben 60 zwei von der rechten Stirnfläche 74 ausgehende axial verlaufende Bohrungen 81 eingebracht.

Das zweite Anpreßglied 18, sh. auch Figur 2, wird von zwei axial spreizbaren Druckscheiben 82 und 82', Kugeln 84 und Federn 86 gebildet, wobei die Druckscheibe 82' in diesem Ausführungsbeispiel mit dem Druckmittelkolben 60 einteilig ausgebildet ist.

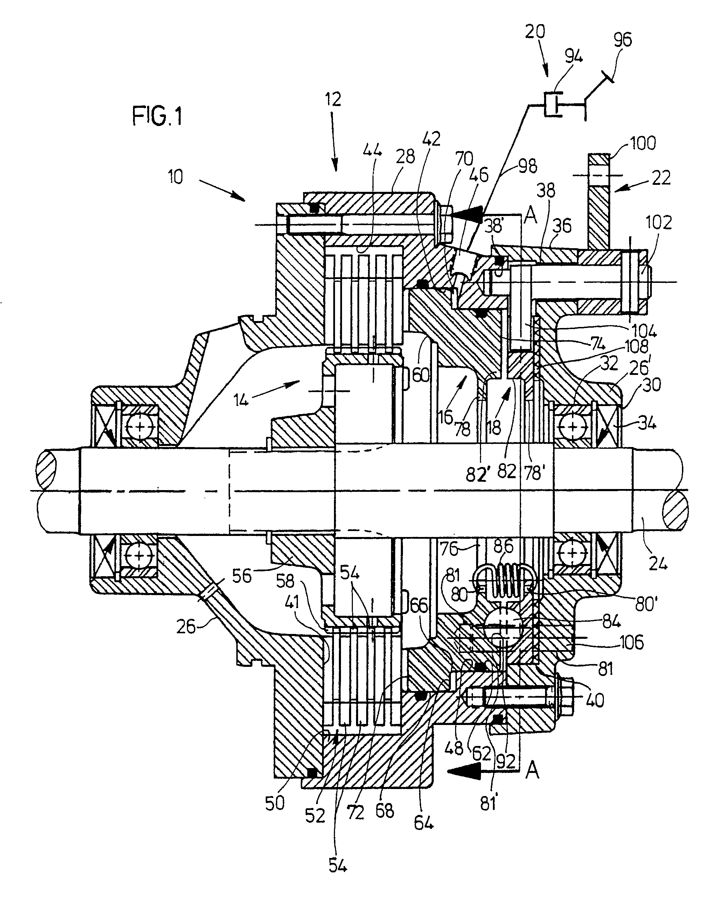

Die in Figur 1 rechts gelegene Druckscheibe 82 gleicht im wesentlichen einem Dreieck, dessen drei Eckbereiche jeweils von einer Bohrung 88 durchdrungen werden, von denen die Schrägflächen 75 ausgehen. Zwischen den beiden in Figur 2 oben gelegenen Eckbereichen erstreckt sich ein Nocken 90 radial nach außen und bietet somit eine Anschlagfläche, deren Bedeutung weiter unten erläutert wird. Die rechte Druckscheibe 82 ist ebenfalls mit einer Schulter 78' und einem Loch 80' versehen und in dem Ringraum 4 des rechten Deckels 26' beweglich aufgenommen.

In die rechte Stirnfläche 74 des die andere Druckscheibe 82' bildenden Druckmittelkolbens 60 sind drei Vertiefungen 92 eingearbeitet, die im unbetätigten Zustand des zweiten Anpreßglieds 18 mit den Bohrungen 88 fluchten und ebenfalls den Ausgangspunkt für ihnen zugeordnete Schrägflächen 75' bilden.

Die beiden Druckscheiben 82, 82' werden mittels mehrerer Federn 86 zusammengehalten und vermeiden somit, daß die Kugeln 84 aus den Vertiefungen 92 und den Bohrungen 88 entfallen können.

Die erste Betätigungseinrichtung 20 enthält eine Hydraulikpumpe 94, die in diesem Ausführungsbeispiel mit einem Bremspedal 96 betrieben wird und Druckmittel über eine Leitung 98 dem Kanal 46 und dem Druckmittelraum 70 zuführen kann.

Die zweite Betätigungseinrichtung 22 wird gebildet von einem Hebel 100, einem Bolzen 102 und einer Klinke 104. An dem Hebel 100 greift - jeweils nicht gezeigt - ein mit einer Handbremse verbundenes Gestänge an und verschwenkt ihn. Der Bolzen 102 ist in dem Hebel 100 drehfest gehalten und wird mit diesem verschwenkt. Zu seiner Lagerung erstreckt er sich durch die Bohrung 38 in dem Lagergehäuse 36 bis in die Bohrung 38' in dem Ring 28. Die Klinke 104 ist wiederrum drehfest auf den Bolzen 102 aufgesetzt und erstreckt sich von diesem radial in den Innenraum des Deckels 26' bis zu der rechten Druckscheibe 82 und kommt an dem Nocken 90 zur Anlage, wie dies aus Figur 2 ersichtlich ist.

Der Teil 24 wird in diesem Ausführungsbeispiel von einer Welle gebildet, die einerseits mit einem Getriebe und andererseits mit einem Rad eines Kraftfahrzeugs verbunden sein könnte und deren Drehung unter bestimmten Umständen gebremst oder abgestellt werden soll.

In den rechten Deckel 26' sind zwei Bohrungen 81' eingearbeitet, die mit den Bohrungen 81 in dem Druckmittelkolben 60 fluchten und jeweils einen Stift 106 in sich aufnehmen, so daß der als Druckscheibe 82' dienende Druckmittelkolben 60 in dem Gehäuse 12 drehfest gehalten ist. Diese Stifte 106 sind auch in Figur 2 wiedergegeben, in der deren wahre Lage angegeben ist; die in Figur 1 gezeigte Lage ist nicht die wirkliche, sondern wurde gewählt, um sie in die Schnittdarstellung mit einzubeziehen.

Zwischen dem Boden des Ringraums 40 und der rechten Stirnfläche der rechten Druckscheibe 82 ist eine Stützscheibe 108 eingefügt.

Nach alledem ergibt sich die Funktion der erfindungsgemäßen Bremse 10 wie folgt.

Es wird davon ausgegangen, daß keine der beiden Betätigungseinrichtungen 20, 22 aktiviert ist und sich der Teil 24 in den Lagern 32 und mit ihm der Lamellenträger 56 mit den innenverzahnten Lamellen 54 dreht.

## Abbremsung des Teils 24 mittels des ersten Anpreßglieds 16

Zum Einleiten des Bremsvorgangs wird das Bremspedal 96 niedergedrückt und somit Druckmittel - in diesem Fall Bremsflüssigkeit - aus der Hydraulikpumpe 94 durch die Leitung 98 in den Druckmittelraum 70 gefördert. Aufgrund des dort ansteigenden Drucks bewegt sich der Druckmittelkolben 60 in Figur 1 nach links, schlägt an den Lamellen 54 an und preßt diese aufeinander. Sobald ein genügend hoher Anpreßdruck aufgebaut ist, können die Lamellen 54 keine Relativbewegung mehr gegeneinander ausführen und legen den Teil 24 an dem linken Deckel 26 fest. Aufgrund der Verbindung der beiden Druckscheiben 82, 82′ über die Federn 86 führt auch das zweite Anpreßglied 18 eine nach links gerichtete Bewegung durch, ohne allerdings selbst eine Bremskraft aufzubauen.

## Abbremsung des Teils 24 mittels des zweiten Anpreßglieds 18

Der Bremsvorgang wird in diesem Fall durch eine Drehung des Hebels 100 eingeleitet, der über den Bolzen 102 auch die Klinke 104 verschwenkt, so daß diese an dem Nocken 90 anschlägt und die Druckscheibe 82 mit Blick auf Figur 2 im Uhrzeigerdrehsinn dreht. Während sich diese Druckscheibe 82 dreht, wird der Druckmittelkolben 60 von den Stiften 106 an einer Drehbewegung gehindert, so daß zwischen beiden Druckscheiben 82, 82′ eine Relativbewegung auftritt, die bewirkt, daß die Kugeln 84 aus den Vertiefungen 92 oder den Bohrungen 88 austreten und auf die Schrägflächen 75 auflaufen. Sobald die Kugeln 84 auf den Schrägflächen 75 abrollen, werden die Druckscheiben 82, 82′ entgegen der Kraft der Federn 86 voneinander wegbewegt, und der die eine Druckscheibe 82′ bildende Druckmittelkolben 60 bewegt sich auf die Lamellen 54 zu, was wie zuvor erläutert, zu einer Abbremsung des Teils 24 führt.

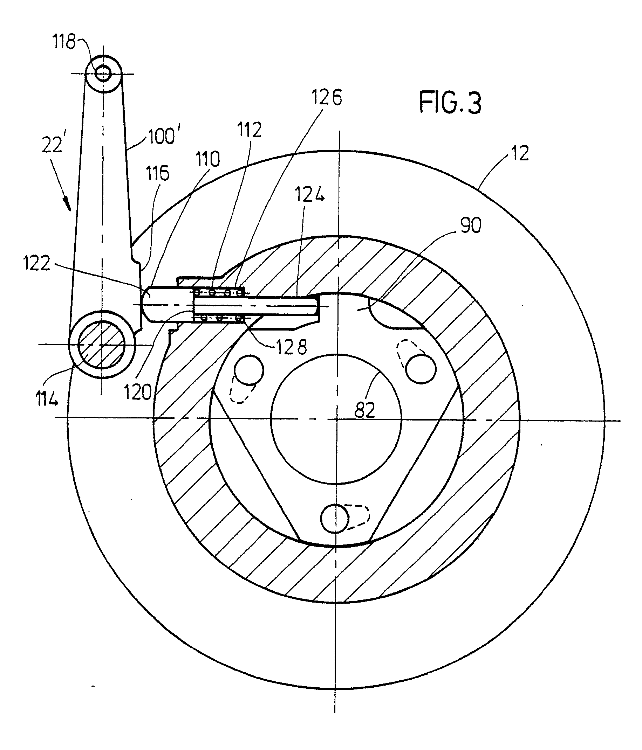

In Figur 3 ist eine zweite Betätigungseinrichtung 22′ dargestellt, die von der in den Figuren 1 und 2 gezeigten lediglich im Aufbau geringfügig abweicht; hinsichtlich der Wirkung entspricht sie der zuvor beschriebenen. Die Druckscheibe 82 ist unverändert geblieben.

Die zweite Betätigungseinrichtung 22′ setzt sich in dieser Ausführungsform anstatt aus einem Hebel 100, einem Bolzen 102 und einer Klinke 104 aus einem Hebel 100′, einem Kolben 110 und einer Feder 112 zusammen.

Der Hebel 100′ ist auf einem an dem Gehäuse 12 befestigten Zapfen 114 schwenkbar in derselben Ebene gelagert, in der sich auch die Druckscheibe 82 im wesentlichen erstreckt. An der der Druckscheibe 82 zugelegenen Seitenfläche des Hebels 100′ ist eine Anschlagfläche 116 angearbeitet. Der Hebel 100′ enthält an seinem dem Zapfen 114 gegenüberliegenden Endbereich eine Öffnung 118 zur Verbindung mit einem nicht gezeigten Bodenzug, Gestänge oder dergleichen, über welches er verschwenkt werden kann.

Der Kolben 110 stellt eine ständige Verbindung zwischen dem Nocken 90 und der Anschlagfläche 116 dar und ist in seiner Länge entsprechend ausgebildet. Er weist eine radial verlaufende Schulter 120 auf, die einen Abschnitt größeren Durchmessers 122 von einem Abschnitt kleineren Durchmessers 124 trennt, und ist in einer Stufenbohrung 126 mit einem Absatz 128 innerhalb des Gehäuses 12 axial beweglich geführt. Seine Längsachse ist so ausgerichtet, daß sie tangential an der Druckscheibe 82 angreift.

Die Feder 112 ist als Schraubendruckfeder ausgebildet und umgibt den Kolben 110 auf einem Teil seiner Länge im Abschnitt kleineren Durchmessers 124. Einenends stützt sie sich an der Schulter 120 und anderenends an dem Absatz 128 ab. Wird der Kolben 110 zu dem Nocken 90 hinbewegt, wird gleichzeitig die Feder 112 zusammengedrückt.

Gemäß der vorstehenden Beschreibung des Aufbaus der zweiten Betätigungseinrichtung 22′ ergibt sich deren Funktion wie folgt.

Zur Einleitung eines Bremsvorgangs mittels der Feststellbremse, d. h. über das zweite Anpreßglied 18, wird der Hebel 100′ mit Blick auf Figur 3 im Uhrzeigerdrehsinn verschwenkt. Aufgrund dieses Schwenkvorgangs wird der Kolben 110 entgegen der Kraft der Feder 112 wiederum mit Blick auf Figur 3 nach rechts geschoben und verschwenkt die Druckscheibe 82 um das zur Erzeugung einer ausreichenden Axialbewegung des zweiten Anpreßglieds 18 erforderliche Maß. Sobald der Hebel 100′ wieder losgelassen wird, schiebt die Feder 112 den Kolben 110 und mit ihm den Hebel 100′ wieder in die Ausgangslage zurück.

## Ansprüche

1. Bremse (10), insbesondere Scheibenbremse, mit

 a mindestens einem Bremsglied (14), das mit einem abzubremsenden Teil (24) verbundenen ist,

 b einem Anlageteil, an den das Bremsglied (14) anlegbar ist,

 c einem ersten Anpreßglied (16), das direkt an das Bremsglied (14) anlegbar ist,

 d einem zweiten Anpreßglied (18), das mit dem ersten Anpreßglied (16) bewegbar ist und

e einer Betätigungseinrichtung (20), die ausschließlich auf eines der Anpreßglieder (16) wirkt.

2. Bremse nach Anspruch 1, dadurch gekennzeichnet, daß das erste Anpreßglied (16) einen axial verschiebbaren Druckmittelkolben (60) enthält.

3. Bremse nach Anspruch 2, dadurch gekennzeichnet, daß der Druckmittelkolben (60) als Stufenkolben ausgebildet ist, an dessen Stufe das Druckmittel und an dessen Stirnseite (74) das andere Anpreßglied (18) angreift.

4. Bremse nach Anspruch 2 oder 3, dadurch gekennzeichnet, daß der Druckmittelkolben (60) gegen Drehung gesichert ist.

5. Bremse nach einem oder mehreren der vorherigen Ansprüche, dadurch gekennzeichnet, daß das zweite Anpreßglied (18) zwei axial spreizbare Druckscheiben (82, 82') enthält.

6. Bremse nach Anspruch 5, dadurch gekennzeichnet, daß die Druckscheiben (82, 82') Schrägflächen (75) enthalten, die zwischen sich Kugeln (84) aufnehmen und gegeneinander tangential verstellbar sind.

7. Bremse nach Anspruch 5 oder 6, dadurch gekennzeichnet, daß eine der Druckscheiben (82, 82') an das erste Anpreßglied (16) anschließt.

8. Bremse nach Anspruch 5 oder 6, dadurch gekennzeichnet, daß der Druckmittelkolben (60) mit einer der Druckscheiben (82') einteilig ausgebildet ist.

9. Bremse nach einem oder mehreren der vorherigen Ansprüche, dadurch gekennzeichnet, daß das Bremsglied (14) eine Vielzahl axial bewegbarer Lamellen (54) enthält.

10. Bremse nach einem oder mehreren der Ansprüche 1 bis 5 dadurch gekennzeichnet, daß eine der Druckscheiben (82, 82') mittels einer zweiten Betätigungseinrichtung (22, 22') tangential bewegbar ist.

11. Bremse nach Anspruch 10, dadurch gekennzeichnet, daß die zweite Betätigungsvorrichtung (22) einen zweiarmigen Hebel (100) enthält, dessen einer Arm (102) exzentrisch an der tangential beweglichen Druckscheibe (82) angreift.

12. Bremse nach Anspruch 10, dadurch gekennzeichnet, daß die zweite Betätigungsvorrichtung (22') einen Hebel (100') und einen Kolben (110) enthält, der in einer Wand eines die Bremse (10) umgebenden Gehäuses (12) axial beweglich geführt ist und einenends an dem Hebel (100') und anderenends an der tangential beweglichen Druckscheibe (82) anliegt.

13. Bremse nach Anspruch 12, dadurch gekennzeichnet, daß der Kolben (110) unter der Kraft einer Feder (112) von der Druckscheibe (82) wegbewegt wird.

14. Bremse nach Anspruch 11 oder 12, dadurch gekennzeichnet, daß der Kolben (110) tangential an der beweglichen Druckscheibe (82) angreift.

FIG.1

FIG. 2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 202 077   (TOWMOTOR CORP.)<br>* Insgesamt *<br>– – – | 1-7,9,10 | F 16 D 65/16<br>F 16 D 55/46<br>B 60 T 1/06<br>F 16 D 55/24 |
| A | FR-A-2 583 841   (AKEBONO BRAKE INDUSTRY CO., LTD)<br>* Insgesamt *<br>– – – | 1-7,9,10 | |
| A | GB-A-2 075 623   (LUCAS INDUSTRIES LTD)<br>* Figuren 1,2 *<br>– – – | 1,9 | |
| A | US-A-3 048 241   (O.K. KELLEY et al.)<br>* Spalte 7, Zeilen 48-54; Figur 7 *<br>– – – | 1,9 | |
| A,D | DE-A-2 412 704   (H. KLAUE)<br>* Figuren 1-3 *<br>– – – | 1 | |
| A | DE-A-2 754 516   (GIRLING LTD)<br>* Figuren 1-4 *<br>– – – | 1 | |
| A | US-A-2 954 850   (C.J. CISLO)<br>* Figuren 1-6 *<br>– – – | 1,8-14 | |
| A | DE-A-2 130 381   (GIRLING LTD)<br>* Figur 3 *<br>– – – – – | 1,12 | |

**RECHERCHIERTE SACHGEBIETE (Int. Cl.5)**

F 16 D 65/00
F 16 D 55/00
B 60 T 1/00

Der vorliegende Recherchenbericht wurde für alle Patentansprüche erstellt

| Recherchenort | Abschlußdatum der Recherche | Prüfer |
|---|---|---|
| Den Haag | 07 Dezember 90 | BRAEMS C.G.I. |